(19) Europäisches Patentamt
European Patent Office
Office européen des brevets

(11) EP 2 484 004 B1

(12) # EUROPÄISCHE PATENTSCHRIFT

(45) Veröffentlichungstag und Bekanntmachung des Hinweises auf die Patenterteilung:
**03.10.2018 Patentblatt 2018/40**

(21) Anmeldenummer: **10747207.8**

(22) Anmeldetag: **26.08.2010**

(51) Int Cl.:
***H02P 29/60*** *(2016.01)* ***H02P 9/10*** *(2006.01)*

(86) Internationale Anmeldenummer:
**PCT/EP2010/062427**

(87) Internationale Veröffentlichungsnummer:
**WO 2011/039006 (07.04.2011 Gazette 2011/14)**

(54) **VERFAHREN ZUM SCHUTZ EINES KRAFTFAHRZEUGGENERATORS VOR EINER ÜBERHITZUNG**

METHOD FOR PROTECTING A MOTOR VEHICLE GENERATOR FROM OVERHEATING

PROCÉDÉ DE PROTECTION D'UN GÉNÉRATEUR DE VÉHICULE AUTOMOBILE CONTRE UNE SURCHAUFFE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **30.09.2009 DE 102009045147**

(43) Veröffentlichungstag der Anmeldung:
**08.08.2012 Patentblatt 2012/32**

(73) Patentinhaber: **SEG Automotive Germany GmbH
70499 Stuttgart (DE)**

(72) Erfinder:
- **SCHERER, Miriam
70734 Fellbach (DE)**
- **ENGBER, Arnold
71711 Steinheim (DE)**
- **SUELZLE, Helmut
71691 Freiberg (DE)**

(74) Vertreter: **Steinbauer, Florian et al
Dehns Germany
Theresienstraße 6-8
80333 München (DE)**

(56) Entgegenhaltungen:
**DE-A1-102005 022 569 DE-B4- 4 141 837**

EP 2 484 004 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft ein Verfahren zum Schutz eines Kraftfahrzeuggenerators vor einer Überhitzung.

Stand der Technik

Aus der DE 41 02 335 A1 sind ein Verfahren und eine Vorrichtung zur Regelung eines Generators mit einer Erregerwicklung und einem Spannungsregler bekannt. Der Spannungsregler regelt durch Beeinflussung des Erregerstromes die Ausgangsspannung des Generators. Ferner sind Mittel zur Temperaturerfassung vorgesehen. Der Generator ist so ausgelegt, dass bei starker Belastung und/oder hohen Außentemperaturen insbesondere bei geringer Generatordrehzahl eine zugelassene Grenztemperatur am Generator oder der Vorrichtung selbst auftreten könnte. Des Weiteren sind Mittel zur Beeinflussung der Erregerstromes vorgesehen, die vor oder bei Erreichen einer Grenztemperatur an einer vorgebbaren Stelle den Erregerstrom absenken. Der Spannungsregler kann als Mikrocomputer ausgeführt sein, in welchem unter Berücksichtigung von gemessenen Größen wie der Reglertemperatur sowie unter Berücksichtigung von im Mikrocomputer abgespeicherten Kennwerten die erforderlichen Berechnungen sowie Soll-/IstWert-Vergleiche ablaufen. Als Kennwerte sind abgespeichert Kennwerte des Generators, des Spannungsreglers, des Fahrzeugs sowie einbauspezifische Kennwerte. Weiterhin sind Grenztemperaturen, bis zu denen die Erhitzung zulässig ist, abgespeichert. Diese Grenztemperaturen können für das Gesamtsystem einheitlich festgelegt sein oder es kann festgelegt werden, dass unterschiedliche Stellen bis zu unterschiedlichen Grenztemperaturen erwärmt werden dürfen. Im Mikrocomputer wird laufend aus der vorliegenden Reglertemperatur, den abgespeicherten Kennwerten sowie ggf. zusätzlich gemessenen Größen, beispielsweise der Generatordrehzahl, berechnet, wie hoch die gerade herrschende Temperatur an vorgebbaren Stellen der Generator-/Spannungsregleranordnung ist. Überscheitet eine solche berechnete Temperatur einen oder unterschiedliche vorgegebene Grenztemperaturen, dann wird der Erregerstrom durch Ansteuerung eines Schalttransistors verringert, wodurch die Temperatur den oder die gewählten Grenzwerte nicht überschreitet. Das vorstehend beschriebene Verfahren arbeitet aber ungenau, da sich die Zeitkonstante der Reglertemperatur von den Zeitkonstanten der Komponententemperaturen unterscheidet.

Aus der DE 41 41 837 B4 ist eine Vorrichtung zur Regelung eines Generators mit einer Erregerwicklung und einem Spannungsregler bekannt. Der Spannungsregler regelt durch eine Beeinflussung des Erregerstromes die Ausgangsspannung des Generators. Der Spannungsregler weist Mittel zur Erfassung der Temperatur des Spannungsreglers auf. Der Spannungsregler oder weitere Mittel zur Beeinflussung des Erregerstromes senken beim Erreichen wenigstens einer Grenztemperatur oder eines Grenztemperaturbereiches den Erregerstrom ab. Ein Mikroprozessor bestimmt aus abgespeicherten Kennwerten und mindestens einer erfassten Größe eine sich im stationären Betrieb einstellende Endtemperatur wenigsten einer vorgebbaren Komponente der Vorrichtung mittels einer Beobachterfunktion. In Abhängigkeit von dieser Endtemperatur ermittelt der Mikroprozessor den Temperaturverlauf und/oder die aktuelle Temperatur der betreffenden Komponente und vergleicht diese mit der Grenztemperatur. Die Mittel zur Beeinflussung des Erregerstromes verwerten Kennwerte des Generators, Kennwerte des Spannungsreglers, Kennwerte des Fahrzeugs und/oder einbauspezifische, abgespeicherte Kennwerte zur Berechnung der Temperatur an vorgebbaren Stellen der Vorrichtung. Im Spannungsregler werden bei der Berechnung der Temperatur an vorgebbaren Stellen laufend ermittelte Signale, vorzugsweise die Temperatur des Spannungsreglers und die Drehzahl des Generators, mit berücksichtigt. Im Mikroprozessor wird daraus die Temperatur an anderer, auswählbarer Stelle des Systems errechnet. Der zeitliche Verlauf der Temperatur wird durch eine Auswertung einer Widerstandsänderung oder durch Auswertung der Temperatur eines temperaturabhängigen Widerstandes in Abhängigkeit vom ermittelten stationären Endwert der Temperatur gebildet. Alternativ dazu kann der zeitliche Verlauf der Temperatur auch durch eine Auswertung der Erwärmung einer Halbleiterstrecke, insbesondere einer Zenerdiode, in Abhängigkeit vom ermittelten stationären Endwert der Temperatur gebildet werden.

Aus der DE 10 2006 019 625 A1 ist eine Temperaturdetektorvorrichtung für einen Elektrogenerator zum Detektieren einer Temperatur eines Elektrogenerators bekannt. Diese Vorrichtung weist einen Temperaturdetektor einer Steuervorrichtung auf, der dafür konfiguriert ist, eine Temperatur der Steuervorrichtung zu detektieren, die elektrisch mit dem Elektrogenerator verbunden ist, welcher eine Erregerwicklung enthält. Die Steuervorrichtung steuert die Zufuhr eines Erregerstromes zu der Erregerwicklung. Des Weiteren gibt sie ein Steuereinrichtungs-Temperatursignal aus, welches die detektierte Temperatur der Steuereinrichtung repräsentiert. Ferner weist die Vorrichtung einen Drehzahldetektor auf, der ein die Drehzahl des Elektrogenerators repräsentierendes Drehzahlsignal ausgibt. Darüber hinaus ist ein Erregerstromdetektor vorgesehen, der ein den Erregerstrom repräsentierendes Erregerstromsignal ausgibt. Schließlich ist eine Temperaturbestimmungsvorrichtung für den Elektrogenerator vorgesehen, die eine Temperatur des Elektrogenerators bestimmt. Dies erfolgt basierend auf dem Steuerungseinrichtungs-Temperatursignal von dem Temperaturdetektor der Steuereinrichtung, dem Drehzahlsignal, dem Erregerstromsignal und einer Ausgangsspannung des Elektrogenerators. Am Ausgang der Temperaturbestimmungsvorrichtung wird ein Elektrogenerator-Temperatursignal ausgegeben, welches für die bestimmte Temperatur des Elektrogenerators repräsentativ ist. Mittels der Temperaturbestimmungsvorrichtung wird eine statische Temperatur, die der Elektrogenerator in einem statischen Zustand aufweist, und eine Übergangstemperatur, die der Elektrogenerator zu einem Zeitpunkt während eines Übergangszustandes aufweist, basierend auf der statischen Temperatur und einem vorbestimmten Betriebsparameter, welcher einer Änderungsrate in der Temperatur des Elektrogenerators während des Übergangszustandes zugeordnet ist, ermittelt. Der Elektrogenerator enthält unter anderem einen Gleichrichter, der so konfiguriert ist, dass die Temperatur des Elektrogenerators, die mit Hilfe der Temperaturbestimmungsvorrichtung des Elektrogenerators bestimmt wird, die Temperatur des Gleichrichters ist.

Offenbarung der Erfindung

Ein Verfahren mit den im Anspruch 1 angegebenen Merkmalen und eine Vorrichtung nach Anspruch 11 weisen demgegenüber den Vorteil auf, dass sowohl Komponenten des Kraftfahrzeuggenerators, die größere thermische Zeitkonstanten als der Regler des Generators aufweisen, als auch Komponenten des Kraftfahrzeuggenerators, die kleinere thermische Zeitkonstanten als der Regler des Generators aufweisen, wirkungsvoll vor einer Überhitzung geschützt werden können. Dieser Vorteil beruht im Wesentlichen darauf, dass der dynamische Offset, der bei der Ermittlung des Temperaturwertes verwendet wird, als Ableitung des Erregerstromes über der Zeit ermittelt wird. Dies ermöglicht auch für Komponenten des Kraftfahrzeuggenerators, deren thermische Zeitkonstante kleiner ist als die thermische Zeitkonstante des Reglers des Generators, einen wirkungsvollen Schutz vor einer Überhitzung.

In vorteilhafter Weise wird die Ableitung des Erregerstromes gewichtet. Dies hat den Vorteil, dass eine relativ geringe Änderung des Erregerstroms auf eine dadurch bedingte, entsprechend größere Änderung der Reglertemperatur umgerechnet werden kann.

Vorzugsweise wird die Ableitung des Erregerstromes auch einer Verzögerung unterworfen. Dies hat den Vorteil, dass eine relativ schnelle Änderung des Erregerstroms in eine dadurch bedingte, entsprechend langsamere Änderung der Reglertemperatur umgerechnet werden kann.

Weitere vorteilhafte Eigenschaften der Erfindung ergeben sich aus deren nachfolgender Erläuterung anhand der Zeichnung. Die Figur 1 zeigt ein Flussdiagramm zur Veranschaulichung eines Verfahrens zum Schutz eines Kraftfahrzeuggenerators vor einer Überhitzung. Die Figur 2 zeigt eine Skizze zur Veranschaulichung eines Beispiels für eine temperaturabhängige Kennlinienverschiebung. Die Figur 3 zeigt eine Skizze zur Veranschaulichung eines Beispiels für die Ermittlung eines Temperaturwertes. Die Figur 4 zeigt ein Blockschaltbild einer Vorrichtung zur Ermittlung eines Temperaturwertes. Die Figur 5 zeigt Diagramme zur Erläuterung eines Ausführungsbeispiels für die Ermittlung eines dynamischen Offsets im Falle einer Lastzuschaltung. Die Figur 6 zeigt Diagramme zur Erläuterung eines Ausführungsbeispiels für die Ermittlung eines dynamischen Offsets im Falle einer Lastabschaltung.

Die Figur 1 zeigt ein Flussdiagramm zur Veranschaulichung eines Verfahrens zum Schutz eines Kraftfahrzeuggenerators vor einer Überhitzung. Bei diesem Verfahren erfolgt gemäß einem Schritt S1 eine Vorgabe einer einer Basistemperatur zugehörigen Begrenzungskennlinie. Diese Begrenzungskennlinie wird im voraus im Werk für den Typ des Kraftfahrzeuggenerators durch Messungen ererstellt, nichtflüchtig abgespeichert und dann im Rahmen der Fertigung des jeweiligen Kraftfahrzeuggenerators in einem Speicher beispielsweise des Generatorreglers nichtflüchtig hinterlegt. Die Basistemperatur ist beispielsweise eine hohe Temperatur von 120° C, bei der üblicherweise eine Begrenzung stattfinden würde. Die Begrenzungskennlinie enthält Informationen darüber, welcher Erregerstrom bei welcher Drehzahl des Fahrzeuggenerators maximal zulässig ist. Die der Basistemperatur zugehörige Begrenzungskennlinie wird in Abhängigkeit von der Drehzahl und der Temperatur des Kraftfahrzeuggenerators ermittelt. Alternativ dazu kann die der Basistemperatur zugehörige Begrenzungskennlinie auch in Abhängigkeit von der Drehzahl, der Temperatur und der Ausgangsspannung des Kraftfahrzeuggenerators ermittelt werden.

In einem darauffolgenden Schritt S2 erfolgt eine Ermittlung eines statischen Offsets SO. Dieser statische Offset wird entweder in Abhängigkeit vom Erregerstrom IE oder in Abhängigkeit vom Erregerstrom IE und der Drehzahl n des Kraftfahrzeuggenerators ermittelt. Dieser statische Offset entspricht dem Temperaturunterschied zwischen der gemessenen Temperatur des Generatorreglers und der Rechentemperatur im thermisch eingeschwungenen Zustand und wird als faktorisierter Erregerstrom berechnet:

$$SO = K1 \bullet IE.$$

Dabei ist SO der statische Offset, K1 ein Faktor und IE der Erregerstrom. Danach erfolgt in einem Schritt S3 eine Ermittlung eines dynamischen Offsets DO. Dieser dynamische Offset wird als Ableitung des Erregerstroms über der Zeit, die dann über eine PT1-Strecke geleitet wird, ermittelt. Er entspricht einer Korrektur des statischen Offsets für den Zeitraum, in dem die Temperatur des Generatorreglers noch nicht ihren thermisch eingeschwungenen Wert erreicht hat. Er wird gemäß der nachfolgenden Beziehung ermittelt:

$$DO(k) = K2 \bullet IE(k) - K3 \bullet IE(k\text{-}1) + K4 \bullet DO(k\text{-}1).$$

Dabei ist DO der dynamische Offset zu einem vorgegebenen Zeitpunkt, IE(k) der Erregerstrom zum vorgegebenen Zeitpunkt, IE(k-1) der Erregerstrom zu einem vorgegebenen vorherigen Zeitpunkt und DO(k-1) der dynamische Offset zum vorgegebenen vorherigen Zeitpunkt. Bei K2, K3 und K4 handelt es sich um Faktoren. Die Faktoren K2 und K3 können dieselben Werte annehmen.

In einem darauffolgenden Schritt S4 erfolgt eine Berechnung einer Rechentemperatur. Diese Rechentemperatur ist dazu vorgesehen, die im Schritt S1 vorgegebene Begrenzungskennlinie, welche maximal zulässige Erregerströme beschreibt, in Abhängigkeit von der Rechentemperatur zu verschieben. Die Berechnung der Rechentemperatur erfolgt gemäß der folgenden Beziehung:

$$TV = TR - SO + DO.$$

Dabei ist TV die Rechentemperatur, TR die gemessene Temperatur des Generatorreglers, SO der statische Offset und DO der dynamische Offset.

Die Verschiebung der Begrenzungskennlinie in Abhängigkeit von der Rechentemperatur erfolgt in einem Schritt S5. Durch diese Verschiebung der Begrenzungskennlinie wird erreicht, dass im Falle des Vorliegens einer hohen Rechentemperatur die Begrenzungskennlinie in Richtung niedrigerer Erregerströme und im Falle des Vorliegens einer niedrigen Rechentemperatur in Richtung höherer Erregerströme verschoben wird. Dies hat zur Folge, dass der Kraftfahrzeuggenerator stets mit einer optimierten Leistung arbeitet. Es ist sichergestellt, dass sowohl Komponenten des Kraftfahrzeuggenerators, deren thermische Zeitkonstanten größer sind als die thermische Zeitkonstante des Generatorreglers als auch Komponenten des Kraftfahrzeuggenerators, deren thermische Zeitkonstanten kleiner sind als die thermische Zeitkonstante des Generatorreglers, wirkungsvoll vor einer Überhitzung geschützt werden. Des Weiteren ist sichergestellt, dass die Ausgangsspannung des Kraftfahrzeuggenerators nicht unnötig weit reduziert wird.

Die Figur 2 zeigt eine Skizze zur Veranschaulichung eines Beispiels für eine temperaturabhängige Kennlinienverschiebung. In der Figur 2 ist längs der Abszisse die Drehzahl n des Kraftfahrzeuggenerators und längs der Ordinate der Erregerstrom IE aufgetragen. Die Begrenzungslinie BL1 ist einer Rechentemperatur T1, die Begrenzungskennlinie BL2 einer Rechentemperatur T2 und die Begrenzungslinie BL3 einer Rechentemperatur T3 zugeordnet. Dabei gilt:

$$T3 > T2 > T1.$$

Es ist ersichtlich, dass bei einer niedrigen Rechentemperatur T1 der Erregerstrom IE am größten gewählt werden kann, dass bei einer mittleren Rechentemperatur T2 der Erregerstrom im mittleren Bereich gewählt werden kann und dass bei einer hohen Rechentemperatur der Erregerstrom einen niedrigen Wert aufweisen muss, d. h. am stärksten begrenzt werden muss.

Die Figur 3 zeigt eine Skizze zur Veranschaulichung eines Beispiels für die Ermittlung der Rechentemperatur. In dieser Figur sind beispielhafte Verläufe für den Erregerstrom IE, die Temperatur TR des Generatorreglers, den statischen Offset SO, den dynamischen Offset DO und die ermittelte Rechentemperatur TV dargestellt.

Es ist ersichtlich, dass bei einer Erhöhung des Erregerstromes IE die Temperatur TR des Generatorreglers langsam bis zu einem erhöhten Wert ansteigt und dann diesen Wert beibehält. Von der Temperatur des Generatorreglers wird der statische Offset SO subtrahiert und der dynamische Offset hinzuaddiert. Im Ergebnis wird daraus die Rechentemperatur TV ermittelt.

Die Figur 4 zeigt ein Blockschaltbild einer Vorrichtung zur Ermittlung der Rechentemperatur. Als Eingangsgrößen dienen die Drehzahl n des Kraftfahrzeuggenerators und der Erregerstrom IE. Im oberen Zweig wird aus der Drehzahl n und dem Erregerstrom IE in einer Recheneinheit G(t) der statische Offset SO ermittelt. Im unteren Zweig erfolgt eine Ableitung des Erregerstromes nach der Zeit dIE/dt, die dann über eine PT1-Strecke geleitet wird, um den dynamischen Offset DO zu ermitteln. Der statische Offset SO und der dynamische Offset DO werden in einem ersten Überlagerer Ü1 miteinander verrechnet. Das Ausgangssignal des ersten Überlagerers Ü1 wird in einem zweiten Überlagerer Ü2 von der gemessenen Reglertemperatur TR subtrahiert, so dass am Ausgang des zweiten Überlagerers Ü2 die Rechentemperatur zur Verfügung steht.

Die Figur 5 zeigt Diagramme zur Erläuterung eines Ausführungsbeispiels für die Ermittlung eines dynamischen Offsets im Falle einer Lastzuschaltung. Dabei ist im obersten Diagramm der Erregerstrom IE, im zweiten Diagramm die Ableitung des Erregerstromes nach der Zeit dIE/dt, im dritten Diagramm eine gewichtete Ableitung GW und im vierten Diagramm der dynamische Offset DO veranschaulicht.

Bei einer derartigen Lastzuschaltung ist die Reglertemperatur zunächst niedriger als im thermisch eingeschwungenen Zustand. Würde die Rechentemperatur für diesen Betriebszustand der Lastzuschaltung nur unter Verwendung der Generatorreglertemperatur und des statischen Offsets berechnet, dann würde eine zu niedrige Rechentemperatur ermittelt. Aufgrund dieser zur niedrigen Rechentemperatur würde zunächst ein zu hoher Erregerstrom zugelassen, aufgrund dessen es zu einer Beschädigung von Komponenten des Kraftfahrzeuggenerators kommen könnte. Aufgrund der Einbeziehung des dynamischen Offsets wird die Rechentemperatur korrekt ermittelt und es erfolgt eine rechtzeitige Begrenzung des Erregerstromes.

Die Figur 6 zeigt Diagramme zur Erläuterung eines Ausführungsbeispiels für die Ermittlung eines dynamischen Offsets im Falle einer Lastabschaltung. Dabei ist wiederum im obersten Diagramm der Erregerstrom IE, im zweiten Diagramm die Ableitung des Erregerstromes nach der Zeit dIE/dt, im dritten Diagramm eine gewichtete Ableitung GW und im vierten Diagramm der dynamische Offset DO veranschaulicht.

Bei einer derartigen Lastabschaltung ist die Reglertemperatur zunächst höher als im thermisch eingeschwungenen Zustand, da der Regler im vorhergehenden Lastzustand durch die entstandene Verlustleistung erhitzt wurde. Diese Erhitzung kühlt erst mit der thermischen Zeitkonstante des Reglers auf einen niedrigeren stationären Wert ab. Dies bedeutet, dass direkt nach einer Lastabschaltung die Rechentemperatur bei alleiniger Berücksichtigung der Generatorreglertemperatur und des stationären Offsets zu hoch berechnet würde. Dies hätte zur Folge, dass für bestimmte Betriebszustände eine Erregerstrombegrenzung in die Wege geleitet würde, obwohl eine derartige Erregerstrombegrenzung für diese Betriebszustände gar nicht notwendig wäre. Dies würde einen Verlust an Generatorleistung bedeuten. Aufgrund der Einbeziehung des dynamischen Offsets wird die Rechentemperatur jedoch korrekt ermittelt und es erfolgt keine unnötige Reduzierung des Erregerstromes.

Mittels des oben beschriebenen Verfahrens kann die Rechentemperatur sowohl für stabile Betriebszustände des Generators als auch während des Wechsels zwischen zwei Betriebszuständen genau ermittelt werden. Dies hat den Vorteil, dass eine benötigte Erregerstrombegrenzung stets exakt eingeleitet werden kann. Ein bevorstehendes Überschreiten von Grenzwerten wird stets so rechtzeitig detektiert, dass ein tatsächliches Überschreiten der Grenzwerte verhindert werden kann. Des Weiteren können Verluste an Generatorleistung, die aufgrund einer zu bald eingeleiteten Reduzierung des Erregerstromes entstehen, verhindert werden. Ferner stellt ein Vorgehen im Sinne des oben beschriebenen Verfahrens im Vergleich zu einer Verwendung von Temperatursensoren eine kostengünstige Möglichkeit dar.

Eine vorteilhafte Weiterbildung der Erfindung besteht darin, bei der Ermittlung der Rechentemperatur zusätzlich den Einfluss von benachbarten Generatorkomponenten zu berücksichtigen. Dieser Einfluss von benachbarten Generatorkomponenten kann beispielsweise am thermischen Verhalten der Dioden bei einem Kaltstart oder in kaltstartähnlichen Betriebszuständen erkannt werden. So werden die Diodentemperaturen unter anderem auch von der Temperatur des Ständers des Generators beeinflusst. Die Ständertemperatur steigt langsamer an als die Diodentemperatur, erreicht aber einen höheren Absolutwert. Dies hat zur folge, dass in einem Diagramm, in welchem die Diodentemperatur und die Ständertemperatur über der Zeit aufgetragen sind, ein Schnittpunkt dieser Kennlinien auftritt. Ab dem Zeitpunkt, an welchem die Ständertemperatur die Diodentemperatur übersteigt, verursacht der Ständer einen zusätzlichen Wärmeeintrag in die Dioden. Dies hat zur Folge, dass die Diodentemperatur bei einem Kaltstart eine zulässige Maximaltemperatur überschreiten wird, obwohl die oben beschriebene Begrenzungsfunktion in allen thermisch stabilen Zuständen den Erregerstrom zuverlässig begrenzt.

Um auch derartigen Einflüssen von benachbarten Generatorkomponenten gerecht zu werden, wird der durch benachbarte Generatorkomponenten bewirkte Wärmeeintrag durch eine Berücksichtigung eines weiteren Offsets kompensiert. Dieser weitere Offset hängt ab von der Änderung der Rechentemperatur. Die Änderung der Rechentemperatur über der Zeit ist verbunden mit einem Anstieg der Temperatur von benachbarten Generatorkomponenten, beispielsweise der Ständertemperatur.

Zur Ermittlung des weiteren Offsets werden Messvorrichtungen zur Detektion des Erregerstromes und der Reglertemperatur, eine Vorrichtung zur Berechnung der Rechentemperatur in Abhängigkeit von zumindest den Eingangsgrößen Erregerstrom und Reglertemperatur, eine Vorrichtung zur Berechnung der Änderung der Rechentemperatur über der Zeit, eine Vorrichtung zur Faktorisierung der berechneten Ableitung der Rechentemperatur und eine Vorrichtung zur Verrechnung des weiteren Offsets mit dem aktuellen Begrenzungswert für den Erregerstrom verwendet.

Bezüglich der Vorrichtung zur Berechnung der Änderung der Rechentemperatur über der Zeit muss die Abtastzeit so gewählt werden, dass kleine Temperaturschwankungen nicht ausgewertet werden, dass aber rechtzeitig auf größere Temperaturschwankungen reagiert wird. Bevorzugt sind deshalb Abtastzeiten zwischen 5 s und 500 s. Die Abtastzeit kann auch dynamisch gewählt werden derart, dass sie sich in Abhängigkeit von den Mess- und Berechnungsgrößen ändert.

Durch die genannte Faktorisierung der berechneten Ableitung kann die Kompensation des Einflusses benachbarter Generatorkomponenten auf verschiedene Generatoren und verschiedene Generatorkomponenten angepasst werden.

Wird - wie vorstehend beschrieben - der berechnete weitere Offset mit dem jeweils aktuellen Begrenzungswert für den Erregerstrom verrechnet, d. h. bei der Ermittlung der Rechentemperatur berücksichtigt, dann wird der Erregerstrom rechtzeitig begrenzt, so dass die Ständertemperatur die Diodentemperatur nicht mehr übersteigen kann und folglich keinen weiteren Wärmeeintrag verursacht.

Tritt das vorstehend beschriebene Verhalten in kritischer Ausprägung nur bei einem Kaltstart auf, dann kann eine Kompensation vorgenommen werden, die nicht über den gesamten Betrieb wirksam ist, sondern ausschließlich direkt nach einem Startvorgang.

Im Rahmen dieser Kompensation kann ein Konstantwert über eine vorher festgelegte Zeitspanne berücksichtigt werden, ein von einem Maximalwert auf einen Minimalwert innerhalb einer vorgegebenen Zeit sinkender Wert berücksichtigt werden, ein von einem Minimalwert auf einen Maximalwert innerhalb einer vorgegebenen Zeit ansteigender Wert berücksichtigt werden, ein in Abhängigkeit von der initial vorliegenden Rechentemperatur, die mit einer vorher festgelegten Steigung von einem Minimalwert auf einen Maximalwert ansteigt, berücksichtigt werden oder ein in Abhängigkeit von der initial vorliegenden Rechentemperatur, die mit einer vorher festgelegten Steigung von einem Maximalwert auf einen Minimalwert fällt, berücksichtigt werden.

## Patentansprüche

1. Verfahren zum Schutz eines Kraftfahrzeuggenerators vor einer Überhitzung, bei welchem eine vorgegebene, einer Basistemperatur zugehörige, einen maximal zulässigen Erregerstrom ($I_E$) beschreibende Begrenzungskennlinie in Abhängigkeit von einer ermittelten Rechentemperatur verschoben wird, **dadurch gekennzeichnet, dass** bei der Ermittlung der Rechentemperatur in einem ersten Schritt (S2) ein statischer Offset (SO) und in einem zweiten Schritt (S3) ein dynamischer Offset (DO) ermittelt wird, der statische Offset (SO) in Abhängigkeit vom Erregerstrom ($I_E$) ermittelt wird und der dynamische Offset (DO) als Ableitung des Erregerstromes ($I_E$) über der Zeit, der einer Verzögerung (PT1) unterworfen wird, ermittelt wird, wobei die Rechentemperatur (TV) aus einer gemessenen Reglertemperatur (TR), dem statischen Offset (SO) und dem dynamischen Offset (DO) berechnet wird.

2. Verfahren nach Anspruch 1, **dadurch gekennzeichnet, dass** der statische Offset (SO) in Abhängigkeit vom Erregerstrom ($I_E$) und der Drehzahl (n) des Kraftfahrzeuggenerators ermittelt wird.

3. Verfahren nach Anspruch 1 oder 2, **dadurch gekennzeichnet, dass** die Ableitung des Erregerstromes ($I_E$) gewichtet wird.

4. Verfahren nach einem der vorherigen Ansprüche, **dadurch gekennzeichnet, dass** die Rechentemperatur nach der folgenden Beziehung berechnet wird:

$$TV = TR - SO + DO,$$

   wobei TV die Rechentemperatur, TR die Reglertemperatur, SO der statische Offset und DO der dynamische Offset ist.

5. Verfahren nach einem der vorhergehenden Ansprüche, **dadurch gekennzeichnet, dass** die der Basistemperatur zugehörige Begrenzungskennlinie in Abhängigkeit von der Drehzahl (n) und der Temperatur des Kraftfahrzeuggenerators ermittelt wird.

6. Verfahren nach einem Ansprüche 1 - 4, **dadurch gekennzeichnet, dass** die der Basistemperatur zugehörige Begrenzungskennlinie in Abhängigkeit von der Drehzahl, der Temperatur und der Ausgangsspannung des Kraftfahrzeuggenerators ermittelt wird.

7. Verfahren nach einem der vorhergehenden Ansprüche, **dadurch gekennzeichnet, dass** die von der Rechentemperatur (TV) abhängige Verschiebung der Begrenzungskennlinie unter Verwendung eines Offsets vorgenommen wird, der unter Verwendung der Basistemperatur und der Rechentemperatur erhalten wird.

8. Verfahren nach Anspruch 7, **dadurch gekennzeichnet, dass** die Verschiebung der Begrenzungskennlinie unter Verwendung folgender Beziehung vorgenommen wird:

$$TBW = BBW - F \cdot (TB - TV),$$

wobei TBW ein temperaturabhängiger Begrenzungswert, BBW ein Basisbegrenzungswert, F ein Faktor, TB die Basistemperatur und TV die Rechentemperatur ist.

**9.** Verfahren nach einem der vorhergehenden Ansprüche, **dadurch gekennzeichnet, dass** zur Kompensation des Einflusses von benachbarten Generatorkomponenten ein weiterer Offset berechnet und bei der Ermittlung der Rechentemperatur berücksichtigt wird.

**10.** Verfahren nach Anspruch 9, **dadurch gekennzeichnet, dass** der weitere Offset nur während einer vorgegebenen Zeit nach einer Änderung einer Betriebsart bei der Ermittlung der Rechentemperatur berücksichtigt wird.

**11.** Kraftfahrzeuggenerator der Mittel zum Schutz vor einer Überhitzung enthält, wobei die Mittel alle Schritte eines der Verfahren nach einem der Ansprüche 1 bis 10 durchführen.

## Claims

**1.** A method for protecting a motor vehicle generator from overheating, in which a predetermined limiting characteristic, associated with a base temperature and describing a maximum permissible excitation current ($I_E$) is shifted in response to a determined computed temperature, **characterised in that** when determining the computed temperature, a static offset (SO) is determined in a first step (S2) and a dynamic offset (DO) is determined in a second step (S3), the static offset (SO) is determined in response to the excitation current ($I_E$) and the dynamic offset (DO) is determined as a derivation of the excitation current ($I_E$) over time, which is subjected to a delay (PT1), wherein the computed temperature (TV) is calculated from a measured regulator temperature (TR), the static offset (SO) and the dynamic offset (DO).

**2.** A method according to claim 1, **characterised in** the static offset (SO) is determined depending on the excitation current ($I_E$) and the rotational speed (n) of the motor vehicle generator.

**3.** The method according to claim 1 or 2, **characterised in that** the derivative of the excitation current ($I_E$) is weighted.

**4.** The method according to any one of the preceding claims, **characterised in that** the computed temperature is calculated according to the following relationship:

$$TV = TR - SO + DO,$$

where TV is the calculated temperature, TR is the regulator temperature, SO is the static offset and DO is the dynamic offset.

**5.** A method according to any of the preceding claims, **characterised in** the limiting characteristic associated with the base temperature is determined depending on the rotational speed (n) and the temperature of the motor vehicle generator.

**6.** A method according to any of the claims 1 to 4, **characterised in that** the limiting characteristic associated with the base temperature is determined depending on the rotational speed, the temperature and the output voltage of the motor vehicle generator.

**7.** A method according to any of the preceding claims, **characterised in that** the shift of the limiting characteristic dependent on the computed temperature (TV) is made using an offset obtained using the base temperature and the computed temperature.

**8.** The method according to claim 7, **characterised in that** the shift of the limiting characteristic is made using the following relationship

$$TBW = BBW - F \cdot (TB - TV),$$

where TBW is a temperature-dependent limit value, BBW is a base limit value, F is a factor, TB is the base temperature, and TV is the computed temperature.

**9.** The method according to any one of the preceding claims, characterised that to compensate for the influence of adjacent generator components, a further offset is calculated and taken into account in the determination of the computed temperature.

**10.** The method according to claim 9, **characterized in that** the further offset is taken into account only during a predetermined time after a change of an operating mode in the determination of the computed temperature.

**11.** A motor vehicle generator containing means for protection from overheating, wherein the means perform all the steps of one of the methods according to one of claims 1 to 10.

## Revendications

**1.** Procédé pour protéger un générateur de véhicule automobile contre une surchauffe, dans lequel une courbe caractéristique de limitation prédéfinie, associée à une température de base et décrivant un courant d'excitation ($I_E$) maximal admissible, est décalée en fonction d'une température de calcul déterminée, **caractérisé en ce que** lors de la détermination de la température de calcul, un décalage statique (SO) est déterminé à une première étape (S2) et un décalage dynamique (DO) est déterminé à une seconde étape (S3), le décalage statique (SO) étant déterminé en fonction du courant d'excitation ($I_E$) et le décalage dynamique (DO) étant déterminé en tant que dérivée du courant d'excitation ($I_E$) en fonction du temps qui est soumis à un retard (PT1), dans lequel la température de calcul (TV) est calculée à partir d'une température de régulation mesurée (TR), du décalage statique (SO) et du décalage dynamique (DO).

**2.** Procédé selon la revendication 1, **caractérisé en ce que** le décalage statique (SO) est déterminé en fonction du courant d'excitation ($I_E$) et de la vitesse de rotation (n) du générateur de véhicule automobile.

**3.** Procédé selon la revendication 1 ou 2, **caractérisé en ce que** la dérivée du courant d'excitation ($I_E$) est pondérée.

**4.** Procédé selon l'une des revendications précédentes, **caractérisé en ce que** la température de calcul est calculée d'après la relation suivante :

$$TV = TR - SO + DO$$

dans laquelle TV représente la température de calcul, TR la température de régulation, SO le décalage statique et DO le décalage dynamique.

**5.** Procédé selon l'une des revendications précédentes, **caractérisé en ce que** la courbe caractéristique de limitation associée à la température de base est déterminée en fonction de la vitesse de rotation (n) et de la température du générateur de véhicule automobile.

**6.** Procédé selon l'une des revendications 1 à 4, **caractérisé en ce que** la courbe caractéristique de limitation associée la température de base est déterminée en fonction de la vitesse de rotation, de la température et de la tension de sortie du générateur de véhicule automobile.

**7.** Procédé selon l'une des revendications précédentes, **caractérisé en ce que** le décalage de la courbe caractéristique de limitation en fonction de la température de calcul (TV) est effectué en utilisant un décalage qui est maintenu en utilisant la température de base et la température de calcul.

**8.** Procédé selon la revendication 7, **caractérisé en ce que** le décalage de la courbe caractéristique de limitation est effectué en utilisant la relation suivante :

$$TBW = BBW - F \, . \, (TB - TV),$$

dans laquelle TBW représente une valeur limite dépendant de la température, BBW représente une valeur limite de base, F représente un facteur, TB représente la température de base et TV représente la température de calcul.

**9.** Procédé selon l'une des revendications précédentes, **caractérisé en ce que** pour compenser l'influence de composants voisins du générateur, un décalage supplémentaire est calculé et pris en compte lors de la détermination de la température de calcul.

**10.** Procédé selon la revendication 9, **caractérisé en ce que** le décalage supplémentaire est pris en compte lors de la détermination de la température de calcul, uniquement pendant une durée prédéfinie après un changement de mode de fonctionnement.

**11.** Générateur de véhicule automobile contenant des moyens de protection contre une surchauffe, dans lequel les moyens mettent en oeuvre toutes les étapes de l'un des procédés selon l'une des revendications 1 à 10.

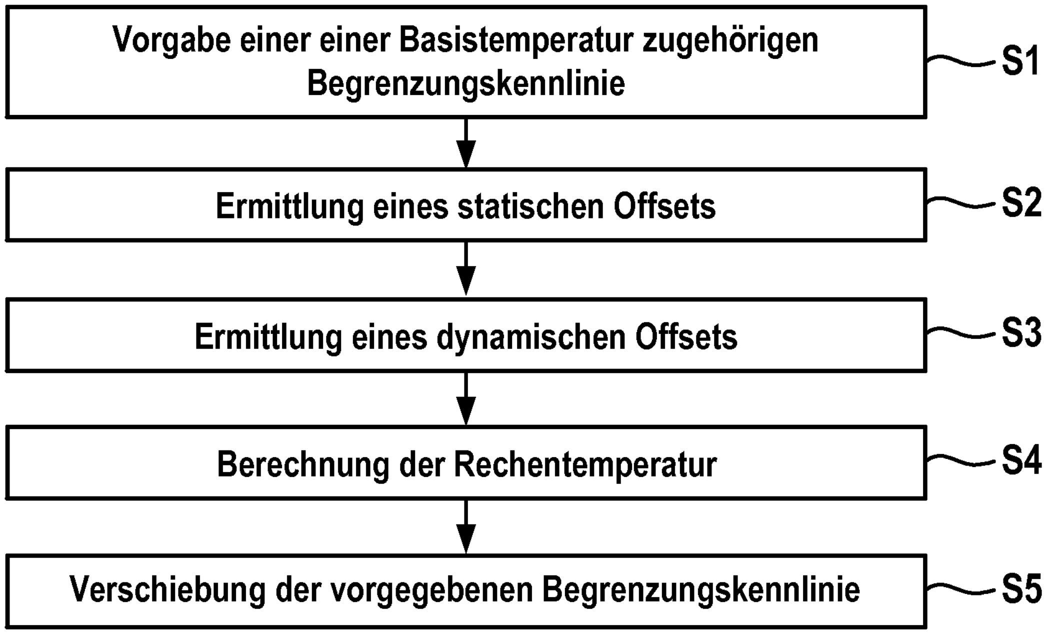
Vorgabe einer einer Basistemperatur zugehörigen Begrenzungskennlinie
S1
Ermittlung eines statischen Offsets
S2
Ermittlung eines dynamischen Offsets
S3
Berechnung der Rechentemperatur
S4
Verschiebung der vorgegebenen Begrenzungskennlinie
S5

Fig. 1

Fig. 2

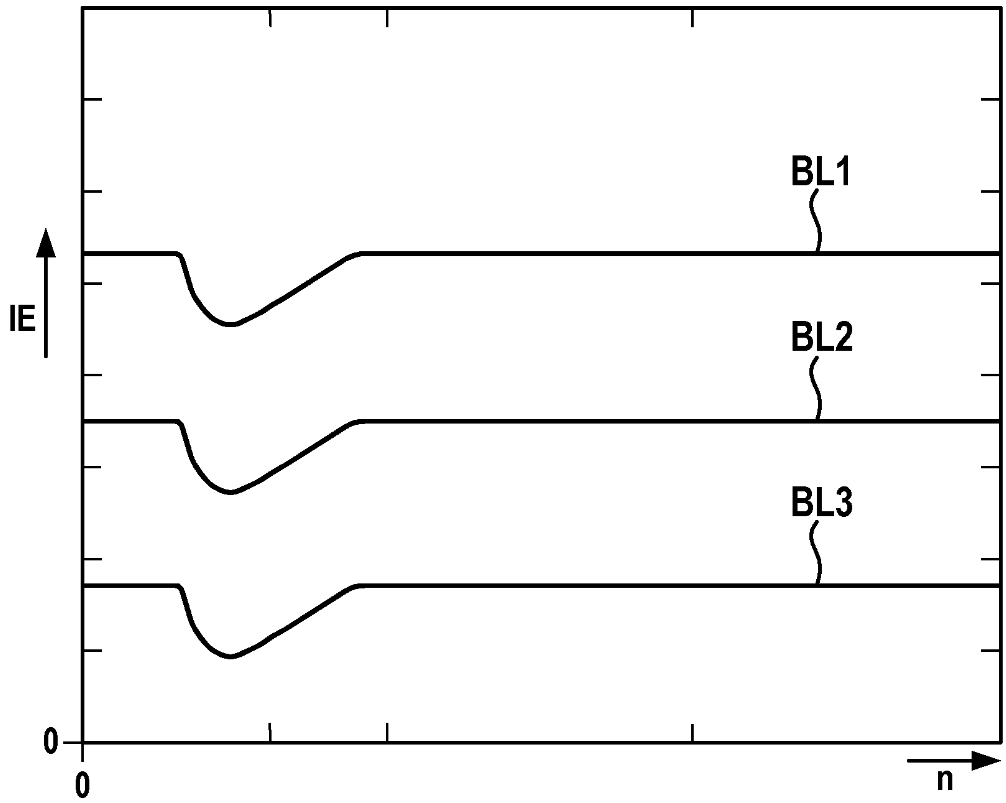
BL1
BL2
BL3
IE
0
0
n

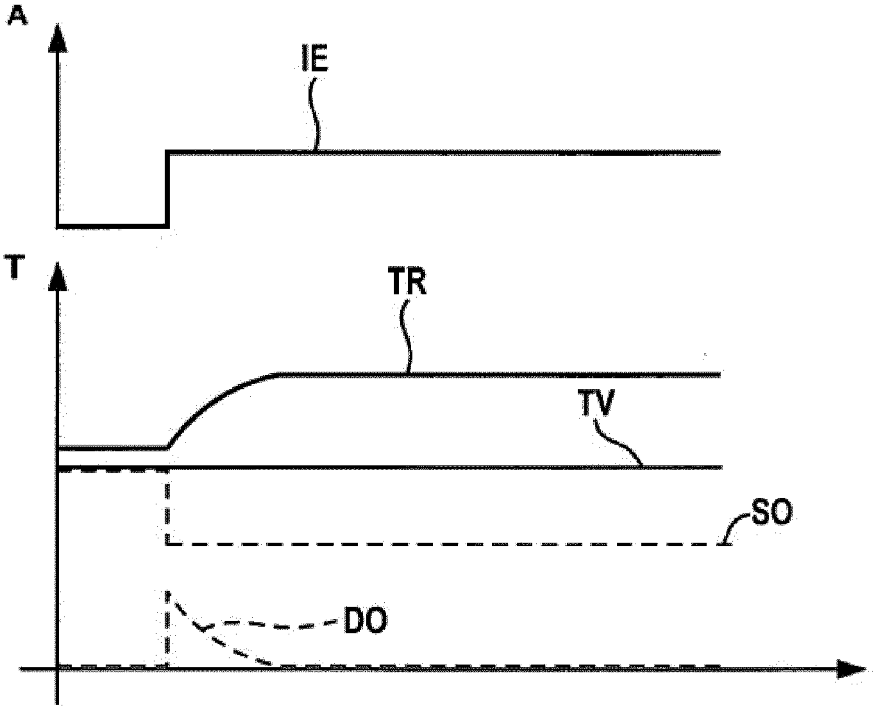


Fig. 3

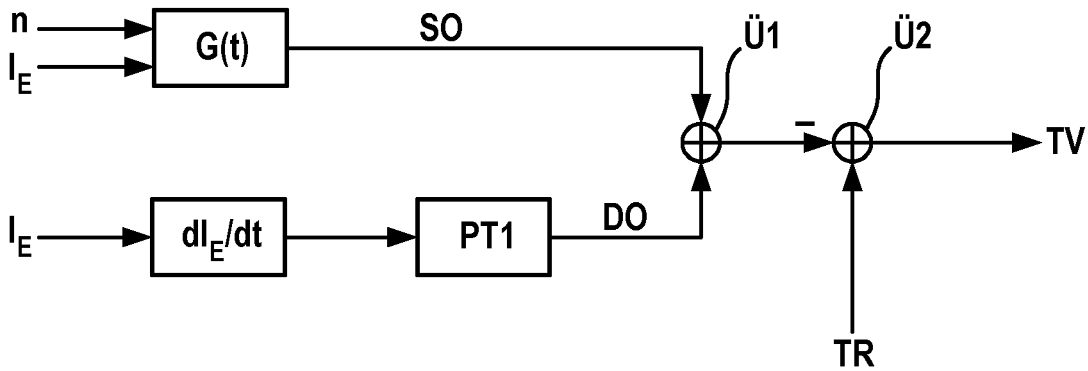


Fig. 4

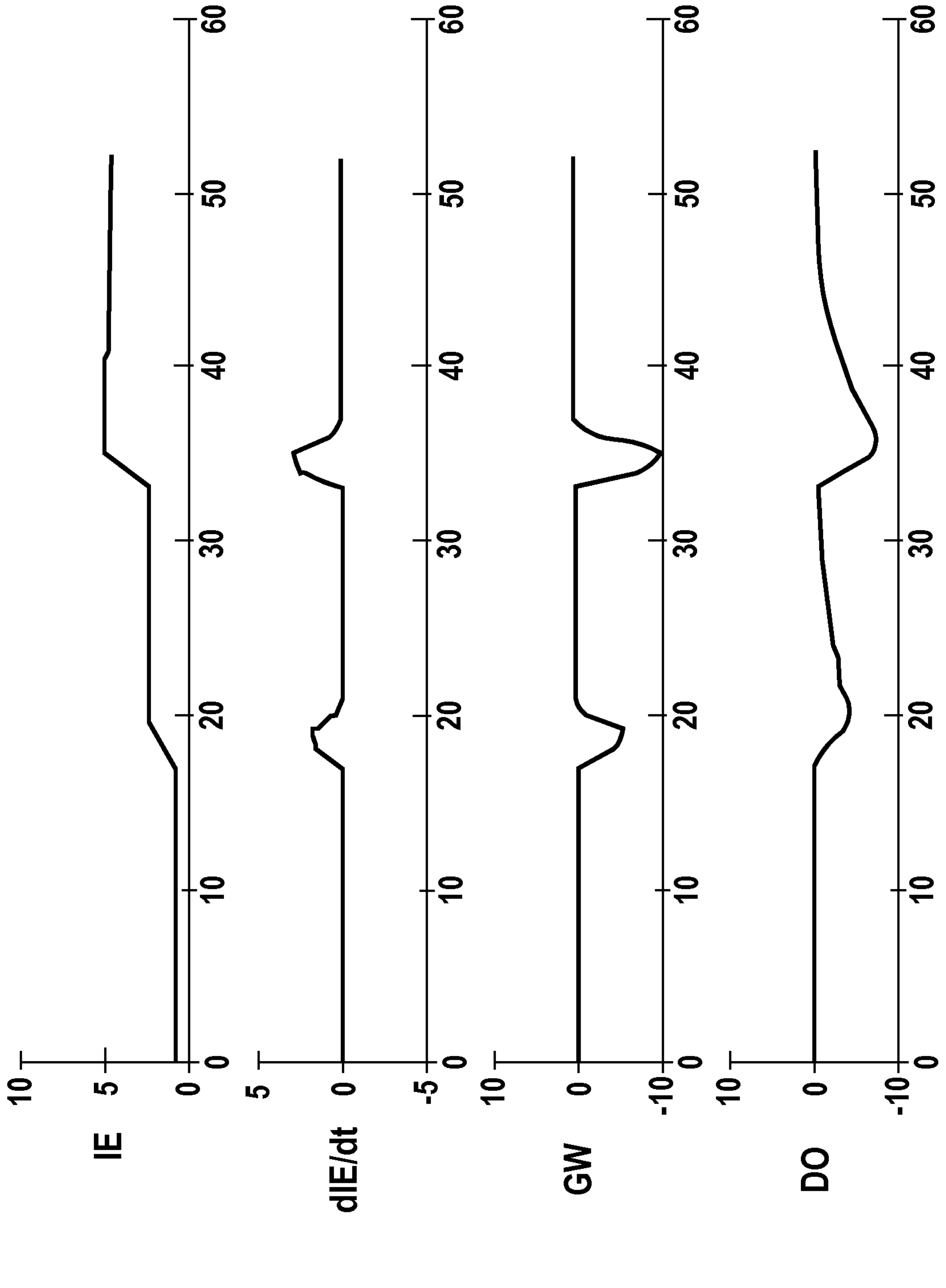


Fig. 5

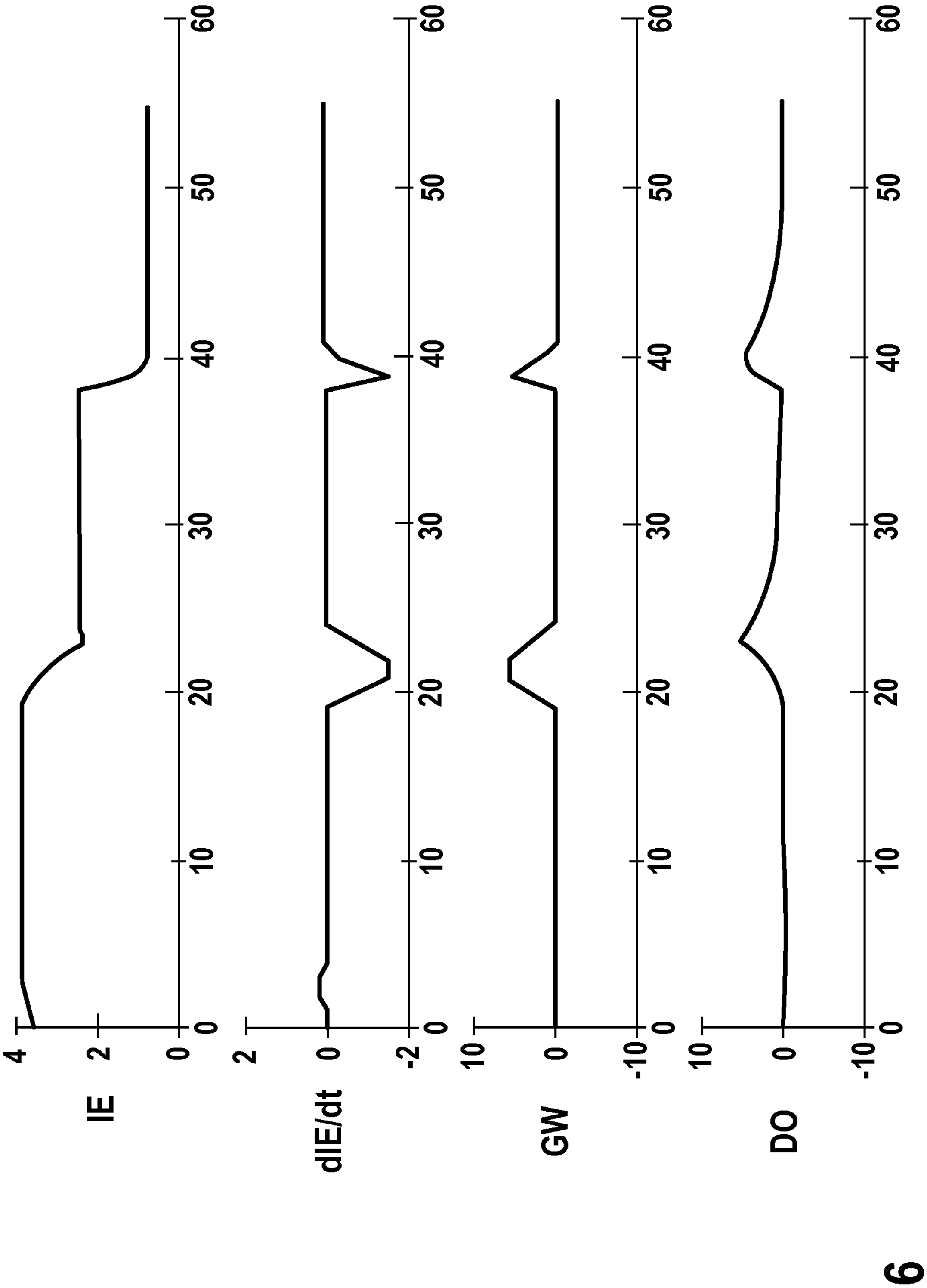


Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4102335 A1
- DE 4141837 B4
- DE 102006019625 A1